(19) **Europäisches Patentamt / European Patent Office / Office européen des brevets**

(11) **EP 4 241 988 A1**

(12) **EUROPEAN PATENT APPLICATION**
published in accordance with Art. 153(4) EPC

(43) Date of publication:
**13.09.2023 Bulletin 2023/37**

(21) Application number: **21888885.7**

(22) Date of filing: **29.07.2021**

(51) International Patent Classification (IPC):
**B32B 27/40** (2006.01)    **B32B 27/30** (2006.01)
**C08G 18/44** (2006.01)    **C08G 18/66** (2006.01)
**C08G 18/73** (2006.01)    **D06N 3/14** (2006.01)

(52) Cooperative Patent Classification (CPC):
**B32B 27/30; B32B 27/40; C08G 18/44;
C08G 18/66; C08G 18/73; D06N 3/14**

(86) International application number:
**PCT/JP2021/028038**

(87) International publication number:
**WO 2022/097332 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.11.2020 JP 2020184985**

(71) Applicant: **DIC Corporation
Tokyo 174-8520 (JP)**

(72) Inventors:
• **KOMATSUZAKI, Kunihiko**
  **Takaishi-shi, Osaka 592-0001 (JP)**
• **MAEDA, Ryo**
  **Takaishi-shi, Osaka 592-0001 (JP)**

(74) Representative: **Beckmann, Claus
Kraus & Weisert
Patentanwälte PartGmbB
Thomas-Wimmer-Ring 15
80539 München (DE)**

(54) **LAMINATE AND SYNTHETIC LEATHER**

(57)    The object to be solved by the present invention is to provide a urethan resin composition which is excellent in adhesion between a thermoplastic resin layer and a coating formed from the urethan resin composition and is excellent in restraining a plasticizer from bleeding. The present invention provides a laminate including a thermoplastic resin layer and a coating formed from a urethane resin composition containing a urethane resin having a structure derived from a polycarbonate polyol produced using a glycol having 8 to 12 carbon atoms as a raw material. Furthermore, the present invention provides a synthetic leather including a surface treatment layer on the side opposite to a thermoplastic resin layer with respect to the coating. As the thermoplastic resin, polyvinyl chloride is preferably used. The urethane resin is preferably one produced using a chain extender having an amino group and an aliphatic polyisocyanate as the raw materials.

EP 4 241 988 A1

**Description**

TECHNICAL FIELD

The present invention relates to a laminate and a synthetic leather.

BACKGROUND ART

A urethane resin composition containing a urethane resin is widely used for a synthetic leather, an artificial leather, a film, a sheet, an adhesive, surface treatment to a sheet-shaped matter, and the like. In particular, in the case where the urethane resin composition is used for a member to be used for a long term such as a synthetic leather for an interior material for vehicles, the urethane resin composition is demanded to have a much higher durability.

On the other hand, the demand for a PVC synthetic leather including a substrate and polyvinyl chloride (PVC) which is applied by means of coating or laminated on the substrate increases due to a cost advantage, while the synthetic leather has a problem such as a low-temperature flexibility. In terms of overcoming the problem, there is a situation where a so-called semi-synthetic leather, in which a urethane resin is applied on a PVC layer by means of coating, is coming to the fore. However, the semi-synthetic leather is demanded to not only exhibit good adhesion between the urethane resin layer and the PVC layer but also restrain bleeding of a plasticizer contained in the PVC layer.

CITATION LIST

PATENT LITERATURE

PTL 1: JPH11-293220A

SUMMARY OF INVENTION

TECHNICAL PROBLEM

The problem to be solved by the present invention is to provide a urethane resin composition which is excellent in not only adhesion between a thermoplastic resin layer and a coating formed from a urethane resin composition but also restraining a plasticizer from bleeding.

SOLUTION TO PROBLEM

The present invention provides a laminate including a thermoplastic resin layer and a coating formed from a urethane resin composition containing a urethane resin having a structure derived from a polycarbonate polyol produced using a glycol having 8 to 12 carbon atoms as a raw material.

Furthermore, the present invention provides a synthetic leather further including a surface treatment layer.

ADVANTAGEOUS EFFECTS OF INVENTION

The laminate of the present invention is excellent in adhesion between a thermoplastic resin layer and a coating formed from a urethane resin composition (hereinafter abbreviated as "adhesion"), and is excellent in restraining a plasticizer from bleeding (hereinafter abbreviated as "bleeding resistance").

DESCRIPTION OF EMBODIMENTS

The laminate of the present invention includes a thermoplastic resin layer and a coating formed from a urethane resin composition containing a urethane resin produced using a specific raw material.

As the thermoplastic resin layer, those formed of, for example, polyvinyl chloride, polyvinyl acetate, polyvinylidene chloride, polystyrene, or the like, which is known, can be used. In the present invention, even when polyvinyl chloride is used as the thermoplastic resin, excellent bleeding resistance is exhibited.

The coating is one formed from a urethane resin composition containing a urethane resin having a structure derived from a polycarbonate polyol produced using a glycol having 8 to 12 carbon atoms as a raw material.

For achieving excellent adhesion and bleeding resistance, it is indispensable for the urethane resin to have a structure derived from a polycarbonate polyol produced using a glycol having 8 to 12 carbon atoms as a raw material. It is guessed that excellent adhesion and bleeding resistance can be achieved by using a non-polar polycarbonate polyol as the polycarbonate polyol.

For the urethane resin, for example, a solvent-type urethane resin composition containing an organic solvent, or an aqueous urethane resin composition containing water can be used. Among them, an aqueous urethane resin composition is preferred from the viewpoint of reducing the burden on the environment.

As the solvent-type urethane resin composition, for example, those containing a urethane resin and an organic solvent can be exemplified.

As the urethane resin, for example, a reaction product of a polyol (a1-1) containing a polycarbonate polyol produced using a glycol having 8 to 12 carbon atoms as a raw material and a polyisocyanate (a2-1) can be used.

Examples of the glycol having 8 to 11 carbon atoms as a raw material for the polycarbonate polyol include a glycol having 8 or 9 carbon atoms such as 2,4-dimethyl-1,5-pentanediol, 2,3-dimethyl-1,5-pentanediol, 2-ethyl-1,5-pentanediol, 2-methyl-1,6-hexanediol, 3-methyl-1,6-hexanediol, 1,7-nonanediol, 2-ethyl-1,6-hexanediol, 2-methyl-1,7-nonanediol, 3-methyl-1,7-nonanediol, 4-methyl-1,7-nonanediol, 1,8-octanediol, 2-methyl-1,8-octanediol, or 1,9-nonanediol; and a glycol having 10 or 11 carbon atoms such as 2-methyl-1,8-octanediol, 3-methyl-1,8-octanediol, 4-methyl-1,8-octanediol, 1,10-decanediol, 2-methyl-1,10-decanediol, 3-methyl-1,10-decanediol, 4-methyl-1,10-decanediol, or 1,11-undecanediol. These glycols may be used singly or in combination of two or more thereof.

As a raw material for the polycarbonate polyol, among them, from the viewpoint of achieving still more excellent adhesion, bleeding resistance, low-temperature flexibility and mechanical strength, the combined use of the glycol having 8 or 9 carbon atoms and the glycol having 10 or 11 carbon atoms is preferred, and the combined use of the glycol having 9 carbon atoms and the glycol having 10 carbon atoms is more preferred.

In the case where the glycol having 8 or 9 carbon atoms and the glycol having 10 or 11 carbon atoms are used in combination, the molar ratio of the both (C8-9/C10-11) is preferably in a range of 5/95 to 50/50, more preferably in a range of 10/90 to 40/60 from the viewpoint of achieving still more excellent adhesion, bleeding resistance, low-temperature flexibility, and mechanical strength.

As the polycarbonate diol, for example, those produced by reacting a glycol having 8 to 11 carbon atoms with a carbonate and/or phosgene according to a known method can be used.

Examples of the carbonate that can be used include dimethyl carbonate, diethyl carbonate, diphenyl carbonate, ethylene carbonate, and propylene carbonate. These compounds may be used singly or in combination of two or more thereof.

The number average molecular weight of the polycarbonate diol is preferably in a range of 1,500 to 3,500, from the viewpoint of achieving still more excellent mechanical strength, bleeding resistance, adhesion, and low-temperature flexibility. Incidentally, the number average molecular weight of the polycarbonate polyol is the value measured according to a gel permeation chromatography (GPC) method.

The amount of the polycarbonate polyol used in the polyol (a1-1) is preferably 30% by mass or more, preferably 50% by mass or more, and more preferably 70% by mass or more, from the viewpoint of achieving still more excellent mechanical strength, bleeding resistance, adhesion, and low-temperature flexibility.

With respect to the polyol (a1-1), the other polyol may be used. Examples of the other polyol that can be used include a polyester polyol, a polyether polyol, and the other polycarbonate polyol than the above-described polycarbonate polyol. These polyols may be used singly or in combination of two or more thereof.

The number average molecular weight of the other polyol is preferably in a range of 500 to 10,000, and more preferably in a range of 700 to 8,000 from the viewpoint of mechanical characteristics of a film and bleeding resistance. Incidentally, the number average molecular weight of the other polyol is the value measured according to a gel permeation chromatography (GPC) method.

With respect to the polyol (a1-1), if necessary, a chain extender (a'1-1) having a molecular weight of less than 500 (preferably in a range of 50 to 450) may be used in combination therewith. Examples of the chain extender (a'1-1) which can be used include a chain extender having a hydroxy group, and a chain extender having an amino group. These chain extenders (a'1-1) may be used singly or in combination of two or more thereof.

Examples of the chain extender having a hydroxy group that can be used include an aliphatic polyol compound such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, or sorbitol; an aromatic polyol compound such as bisphenol A, 4,4'-dihydroxy diphenyl, 4,4'-dihydroxy diphenylether, 4,4'-dihydroxy diphenylsulfone, hydrogenated bisphenol A, or hydroquinone; and water. These chain extenders may be used singly or in combination of two or more thereof.

Examples of the chain extender having an amino group that can be used include ethylene diamine, 1,2-propane diamine, 1,6-hexamethylene diamine, piperazine, 2-methyl piperazine, 2,5-dimethyl piperazine, isophorone diamine, 4,4'-dicyclohexylmethane diamine, 3,3'-dimethyl-4,4'-dicyclohexylmethane diamine, 4,4'-diphenylmethane diamine, 3,3'-dichloro-4,4'-diphenylmethane diamine, 1,2-cyclohexane diamine, 1,4-cyclohexane diamine, aminoethylethanolamine, hydrazine, diethylenetriamine, and triethylenetetramine. These chain extenders may be used singly or in combination of two or more thereof.

As the chain extender (a'1-1), the chain extender having an amino group is preferred from the viewpoint of achieving still more excellent adhesion and bleeding resistance, and it is more preferred to use at least one compound selected from the group consisting of piperazine, hydrazine, isophorone diamine, and 4,4'-dicyclohexylmethane diamine.

In the case of using the chain extender (a'1-1), the amount of the chain extender (a'1-1) in the polyol (a1-1) is preferably in a range of 0.1 to 80 % by mass, and more preferably in a range of 1 to 60 % by mass, from the viewpoint of achieving still more excellent adhesion and bleeding resistance.

Examples of the polyisocyanate (a2-1) that can be used include an aromatic polyisocyanate such as 4,4'-diphenylmethane diisocyanate, 2,4'-diphenylmethane diisocyanate, carbodiimide-modified diphenylmethane diisocyanate, crude diphenylmethane diisocyanate, phenylene diisocyanate, toluene diisocyanate, naphthalene diisocyanate, xylylene diisocyanate, or tetramethylxylylene diisocyanate; and an aliphatic polyisocyanate such as hexamethylene diisocyanate, lysine diisocyanate, cyclohexane diisocyanate, hydrogenated xylylene diisocyanate, isophorone diisocyanate, or dicyclohexylmethane diisocyanate. These polyisocyanates may be used singly or in combination of two or more thereof. Among them, from the viewpoint of achieving still more excellent adhesion and bleeding resistance, an aliphatic polyisocyanate is preferred, and it is preferred to use one or more of polyisocyanates selected from the group consisting of hexamethylene diisocyanate, isophorone diamine, and dicyclohexylmethane diisocyanate.

The content of the aliphatic polyisocyanate contained in the polyisocyanate (a2-1) is preferably 30% by mass or more, and more preferably 50% by mass, from the viewpoint of achieving still more excellent adhesion and bleeding resistance.

Examples of the method of producing the urethane resin include a method which includes charging the polyol (a1-1), the polyisocyanate (a2-1), and, if necessary, the chain extender (a'1-1) at a time and allowing them to react. The reaction is preferably performed at a temperature of 50 to 100°C for approximately from 3 to 10 hours. The reaction may be performed in the organic solvent described later.

The molar ratio ((the isocyanate group)/(the hydroxy group and the amino group)) of the isocyanate group of the polyisocyanate (a2-1) to the sum of the hydroxy group of the polyol (a1-1) and the hydroxy group and the amino group of the chain extender (a'1-1) is preferably in a range of 0.8 to 1.2, and more preferably in a range of 0.9 to 1.1.

The weight average molecular weight of the urethane resin is preferably in a range of 5,000 to 1,000,000, and more preferably in a range of 10,000 to 500,000, from the viewpoint of the mechanical characteristics of a film, adhesion, and bleeding resistance. Incidentally, the weight average molecular weight of the urethane resin is the value measured in the same manner as in the measurement for the number average molecular weight of the polyol (a1-1).

The content of the urethane resin contained in the solvent-type urethane resin composition is, for example, in a range of 10 to 90 parts by mass.

Examples of the organic solvent that can be used include N,N-dimethyl formamide, N,N-dimethyl acetamide, N-methyl pyrrolidone, N,N,2-trimethyl propionamide, N,N-dimethyl acrylamide, N,N-dimethyl propionamide, N,N-diethyl acetamide, N,N-diethyl acrylamide, N-ethyl pyrrolidone, 2-pyrrolidone, 1,3-dimethyl-2-imidazolidinone, and dimethyl sulfoxide. These organic solvents may be used singly or in combination of two or more thereof. If necessary, an organic solvent such as ethyl acetate, methyl acetate, butyl acetate, acetone, methyl ethyl ketone, methyl isobutyl ketone, methanol, ethanol, isopropyl alcohol, isobutanol, sec-butanol, or tert-butanol may be used in combination therewith.

The content of the organic solvent contained in the solvent-type urethane resin composition is, for example, in a range of 10 to 90% by mass.

As the aqueous urethane resin composition, for example, those containing a urethane resin and water can be exemplified.

The urethane resin is one dispersible in water, and for example, a urethane resin having a hydrophilic group such as an anionic group, a cationic group, or a nonionic group, or a urethane resin forcibly dispersed in water with an emulsifier can be used. These urethane resins may be used singly or in combination of two or more thereof.

Examples of the method of obtaining the urethane resin having an anionic group include a method which includes using at least one compound selected from the group consisting of a compound having a carboxy group and a compound having a sulfonyl group as a raw material.

Examples of the compound having a carboxy group that can be used include 2,2-dimethylol propionic acid, 2,2-dimethylol butanoic acid, 2,2-dimethylol butyric acid, 2,2-dimethylol propionic acid, and 2,2-valerianic acid. These compounds may be used singly or in combination of two or more thereof.

Examples of the compound having a sulfonyl group that can be used include 3,4-diaminobutane sulfonic acid, 3,6-diamiono-2-toluenesulfonic acid, 2,6-diaminobenzenesulfonic acid, N-(2-aminoethyl)-2-aminosulfonic acid, and N-(2-aminoethyl)-2-aminoethylsulfonic acid. These compounds may be used singly or in combination of two or more thereof.

The part or all of the carboxy group and the sulfonyl group present in the urethane resin composition may be neutralized with a basic compound. Examples of the basic compound that can be used include an organic amine such as ammonia, triethylamine, pyridine, or morpholine; an alkanolamine such as monoethanolamine, or dimethylethanolamine; and a metal basic compound containing sodium, potassium, lithium, calcium, or the like.

Examples of the method of obtaining the urethane resin having a cationic group include a method which includes using one or two or more of a compound having an amino group as a raw material.

Examples of the compound having an amino group that can be used include a compound having a primary or secondary amino group such as triethylene tetramine or diethylene triamine; and a compound having a tertiary amino group such as N-alkyl dialkanol amine, e.g., N-methyldiethanolamine or N-ethyldiehanolamine, or N-alkyldiaminoalkylamine, e.g., N-methyldiaminoethylamine or N-ethyldiaminoethylamine. These compounds may be used singly or in combination of two or more thereof.

Examples of the method of obtaining the urethane resin having a nonionic group include a method which includes using one or two or more of a compound having an oxyethylene structure as a raw material.

Examples of the compound having an oxyethylene structure that can be used include a polyether polyol having an oxyethylene structure such as polyoxyethylene glycol, polyoxyethylene polyoxypropylene glycol, or polyoxyethylene polyoxytetramethylene glycol. These compounds may be used singly or in combination of two or more thereof.

Examples of the emulsifier that can be used in obtaining a urethane resin forcibly dispersed in water include a nonionic emulsifier such as polyoxyethylene nonylphenylether, polyoxyethylene laurylether, polyoxyethylene styryl phenyl ether, polyoxyethylene sorbitol tetraoleate, or a polyoxyethylene•polyoxypropylene copolymer; an anionic emulsifier such as an aliphatic acid salt, e.g., sodium oleate, an alkyl sulfate, an alkylbenzene sulfonic acid salt, an alkylsulfosuccinic acid salt, a naphthalene sulfonic acid salt, a polyoxyethylene alkylsulfuric acid salt, an alkanesurfonate sodium salt, or an alkyldiphenylether sulfonic acid sodium salt; and a cationic emulsifier such as an alkylamine salt, an alkyltrimethyl ammonium salt, or an alkyldimethylbenzyl ammonium salt. These emulsifiers may be used singly or in combination of two or more thereof.

As the urethane resin, the urethane resin having an anionic group and/or the urethane resin having a nonionic group is preferred from the viewpoint of achieving still more excellent aqueous dispersion stability, hydrolysis resistance, peeling strength, instantly peeling property, bleeding resistance, and light resistance.

The amount of the raw material to be used in producing the urethane resin having a hydrophilic group in the raw materials constituting the urethane resin is preferably in a range of 0.01 to 10% by mass, and more preferably in a range of 0.1 to 5% by mass, from the viewpoint of achieving still more excellent aqueous dispersion stability, hydrolysis resistance, peeling strength, instantly peeling property, bleeding resistance, and light resistance, which are obtainable by adjusting the concentration of the urethane resin having a hydrophilic group.

Examples of the urethane resin include a reaction product of a polyol (a1-2) containing a polycarbonate polyol produced using a glycol having 8 to 12 carbon atoms as a raw material, a polyisocyanate (a2-2), and a raw material to be used for producing the urethane resin having a hydrophilic group.

As the polyol (a1-2) containing a polycarbonate polyol, the same as the polyol (a1-1) can be used.

If necessary, the polyol (a1-2) may be used in combination with a chain extender (a'1-2) having a molecular weight of less than 500 (preferably in a range of 50 to 450). As chain extender (a'1-2), the same as the chain extender (a'1-1) can be used. From the viewpoint of achieving still more excellent adhesion and bleeding resistance, a chain extender having an amino group is preferred, and it is more preferred to use at least one compound selected from the group consisting of piperazine, hydrazine, isophorone diamine, and 4,4'-dicyclohexylmethane diamine.

In the case of using the chain extender (a'1-2), the amount of the chain extender (a'1-2) in the polyol (a1-2) is preferably in a range of 0.1 to 80% by mass, and more preferably in a range of 1 to 60% by mass, from the viewpoint of achieving still more excellent adhesion and bleeding resistance.

As the polyisocyanate (a2-2), the same as the polyisocyanate (a2-1) can be used. From the viewpoint of achieving still more excellent adhesion and bleeding resistance, an alicyclic polyisocyanate is preferred, and isophorone diamine and/or dicyclohexylmethane diisocyanate is preferable.

The content of the alicyclic polyisocyanate in the polyisocyanate (a2-2) is preferably 30% by mass or more, more preferably 50% by mass from the viewpoint of achieving still more excellent bleeding resistance.

Examples of the method of producing the urethane resin include a method which includes charging a raw material to be used for producing the urethane resin having a hydrophilic group, the polyisocyanate (a2-2), the polyol (a1-2), and, if necessary, the chain extender (a'1-2) at a time and allowing them to react. In this method, the reaction can be performed, for example, at a temperature of 50 to 100°C for 3 to 10 hours.

When the polyol (a2-1), a raw material to be used for producing the urethane resin having a hydrophilic group, and the chain extender (a'1-2) are used, with respect to the sum of the hydroxy group and the amino group contained therein and the isocyanate group contained in the aromatic polyisocyanate (a2-2), the molar ratio ((isocyanate group)/(the sum of the hydroxy group and the amino group)) is preferably in a range of 0.8 to 1.2, and more preferably in a range of 0.9 to 1.1.

In producing the urethane resin, it is preferred to inactivate the isocyanate group remained in the urethane resin. For inactivating the isocyanate group, the use of an alcohol having a hydroxy group, such as methanol, is preferred. In the case of using the alcohol, the amount is preferably in a range of 0.001 to 10 parts by mass per 100 parts by mass of the urethane resin.

Further, in producing the urethan resin, an organic solvent may be used. Examples of the organic solvent that may be used include a ketone compound such as acetone or methyl ethyl ketone, an ether compound such as tetrahydrofuran or dioxane, an acetate compound such as ethyl acetate or butyl acetate, a nitrile compound such as acetonitrile, and an amide compound such as dimethylformamide or N-methyl pyrrolidone. These organic solvents may be used singly or in combination of two or more thereof. Incidentally, it is preferred in obtaining the urethane resin composition to remove the organic solvent by means of a distillation method etc.

As the water, for example, an ion-exchanged water, distilled water, or tap water can be used. Among them, it is preferred to use the ion-exchanged water with less impurities. The content of the water (B) contained in the aqueous urethane resin composition is preferably in a range of 20 to 90% by mass, and more preferably in a range of 40 to 80% by mass from the viewpoint of workability, coating property and storage stability.

The urethane resin composition of the present invention, which may be a solvent-type urethane resin composition or an aqueous urethane resin composition, may contain the other additive, if necessary.

Examples of the other additive which can be used include a catalyst for urethanization, a neutralizer, a crosslinking agent, a silane coupling agent, a thickener, a filler, a thixotropy-imparting agent, a tackifier, a wax, a heat stabilizer, a light stabilizer, a fluorescent brightening agent, a foaming agent, a pigment, a dye, an electrical-conductivity-imparting agent, an antistatic agent, a moisture permeability-improving agent, a water repellent agent, an oil repellent agent, a hollow foamed material, a flame retardant, a water absorbent, a moisture absorbent, a deodorizer, a foam stabilizer, an anti-blocking agent, and a hydrolysis-preventing agent. These additives may be used singly or in combination of two or more thereof.

The swelling rate of a film after the coating having a thickness of 30 μm was cut into a length of 3 cm and a breadth of 3 cm, and immersed in a plasticizer for 24 hours (hereinafter abbreviated as "swelling rate of a film") is preferably 10% or more, more preferably in a range of 10 to 40%, and further preferably in a range of 10 to 25% from the viewpoint of achieving still more excellent bleeding resistance. When the swelling rate of the film satisfies the condition, the urethane resin contained in the coating is assumed to easily includes the plasticizer therein, thereby exhibiting excellent bleeding resistance.

Examples of the plasticizer that can be used include a phthalate such as dioctyl phthalate, diisononyl phthalate, diisodecyl phthalate, or dibutyl phthalate; an adipate such as dioctyl adipate or diisononyl adipate; a trimellitate such as trioctyl trimellitate; a phosphate such as tricresyl phosphate, a citrate such as tributyl acetylcitrate; an epoxidized vegetable oil such as an epoxidized soybean oil or an epoxidized linseed oil; a sebacate; an azelate; a maleate; a benzoate; and the other polyester. These plasticizers may be used singly or in combination of two or more thereof. In the present invention, even with respect to a phtharate which is often used for polyvinyl chloride, excellent bleeding resistance is exhibited.

As described above, the laminate of the present invention is excellent in adhesion and bleeding resistance.

Next, the synthetic leather of the present invention is described below.

Examples of the synthetic leather include those having a substrate, a thermoplastic resin layer, the coating and a surface treatment layer, sequentially.

Examples of the substrate that can be used include unwoven, woven, or knitting of a polyester fiber, a polyethylene fiber, a nylon fiber, an acrylic fiber, a polyurethane fiber, an acetate fiber, a rayon fiber, a polylactic acid fiber, cotton, hemp, silk, wool, a glass fiber, a carbon fiber, or a mixed fiber of the preceding fibers.

Examples of the surface treatment layer that can be used include those formed from a solvent-type urethane resin, an aqueous urethane resin, a solvent-type acrylic resin, or an aqueous acrylic resin, which are known.

EXAMPLES

In the following, the present invention will be described in more detail referring to the examples.

[Example 1]

<Preparation of Aqueous Urethane Resin Composition (1)>

Into a four-neck flask equipped with a stirrer, a reflux condenser, a thermometer, and a nitrogen gas-introducing tube, under a nitrogen flow, 340 parts by mass of polycarbonate polyol (which was produced using 1,9-nonanediol and 2-methyl-1,8-octanediol as the raw materials, and had a number average molecular weight of 2,000), 300 parts by mass of methylethylketone, and 11 parts by mass of dimethylolpropionic acid were added and mixed uniformly. Then, 90 parts by mass of dicyclohexylmethane diisocyanate was added thereto, and subsequently, 0.15 parts by mass of bismas carboxylate was added thereto. The resulting mixture was allowed to react at 75°C for about 4 hours, thereby obtaining a methyl ethyl ketone solution containing a urethane prepolymer having an isocyanate group. Next, 10 parts by mass of triethylamine was added thereto to thereby neutralize the carboxy group contained in the urethane prepolymer. After that, 900 parts by mass of an ion-exchanged water was added, and subsequently 6.8 parts by mass of piperazine was added to perform the reaction. After the reaction, methyl ethyl ketone was removed under reduced pressure, thereby obtaining an aqueous urethane resin composition (1).

<Preparation of Laminate>

The aqueous urethane resin composition (1) was applied on a PVC substrate (manufactured by Engineering Test Service Co., Ltd.) such that the thickness after drying was 10 $\mu$m, and subjected to drying at 120°C for 2 minutes, thereby obtaining a laminate.

[Example 2]

<Preparation of Aqueous Urethane Resin Composition (2)>

An aqueous urethane resin composition (2) and a laminate were prepared in the same manner as in Example 1, except for changing "90 parts by mass of dicyclohexylmethane diisocyanate" to "76 parts by mass of isophorone diisocyanate".

[Example 3]

<Preparation of Aqueous Urethane Resin Composition (3)>

An aqueous urethane resin composition (3) and a laminate were prepared in the same manner as in Example 1, except for changing "6.8 parts by mass of piperazine" to "4.9 parts by mass of hydrazine".

[Example 4]

<Preparation of Aqueous Urethane Resin Composition (4)>

An aqueous urethane resin composition (4) and a laminate were prepared in the same manner as in Example 1, except for changing "6.8 parts by mass of piperazine" to "13.4 parts by mass of isophorone diamine".

[Comparative Example 1]

<Preparation of Aqueous Urethane Resin Composition (R1)>

An aqueous urethane resin composition (R1) and a laminate were prepared in the same manner as in Example 1, except for changing the polycarbonate polyol to the polycarbonate polyol (which was produced using 1,6-hexanediol as the raw material, and has a number average molecular weight of 2,000).

[Comparative Example 2]

<Preparation of Aqueous Urethane Resin Composition (R2)>

An aqueous urethane resin composition (R2) and a laminate were prepared in the same manner as in Example 1, except for changing the polycarbonate polyol to the polytetramethylene glycol (number average molecular weight: 2,000).

[Measurement Method of Number Average Molecular Weight and Weight Average Molecular Weight]

With respect to the polyols and the urethane resins used in Examples and Comparative Examples, the number average molecular weight of the polyols and the weight average molecular weight of the urethane resins are those obtained by performing measurement under the following conditions according to a gel permeation column chromatography (GPC) method.

Measurement Device: High performance GPC ("HLC-8220GPC", manufactured by TOSOH CORPORATION)
Columns: The following columns manufactured by TOSOH CORPORATION were connected in series and used.

TSKgel G5000 (7.8mm I.D. x 30 cm) x 1
TSKgel G4000 (7.8mm I.D. x 30 cm) x 1
TSKgel G3000 (7.8mm I.D. x 30 cm) x 1
TSKgel G2000 (7.8mm I.D. x 30 cm) x 1

Detector: RI (differential refractometer)
Column Temperature: 40°C
Eluent: tetrahydrofuran (THF)
Flow Rate: 1.0 mL/minute
Injection Amount: 100 μL (a tetrahydrofuran solution having a sample concentration of 0.4% by mass)
Standard Sample: The following standard polystyrenes were used to prepare a calibration curve.

(Standard Polystyrene)

TSKgel standard polystyrene A-500, manufactured by TOSOH CORPORATION
TSKgel standard polystyrene A-1000, manufactured by TOSOH CORPORATION
TSKgel standard polystyrene A-2500, manufactured by TOSOH CORPORATION
TSKgel standard polystyrene A-5000, manufactured by TOSOH CORPORATION
TSKgel standard polystyrene F-1, manufactured by TOSOH CORPORATION
TSKgel standard polystyrene F-2, manufactured by TOSOH CORPORATION
TSKgel standard polystyrene F-4, manufactured by TOSOH CORPORATION
TSKgel standard polystyrene F-10, manufactured by TOSOH CORPORATION
TSKgel standard polystyrene F-20, manufactured by TOSOH CORPORATION
TSKgel standard polystyrene F-40, manufactured by TOSOH CORPORATION
TSKgel standard polystyrene F-80, manufactured by TOSOH CORPORATION
TSKgel standard polystyrene F-128, manufactured by TOSOH CORPORATION
TSKgel standard polystyrene F-288, manufactured by TOSOH CORPORATION
TSKgel standard polystyrene F-550, manufactured by TOSOH CORPORATION

[Method of Evaluating Adhesion]

With respect to the laminates obtained in Examples and Comparative Examples, cuts were made at a width of 1 cm, and a cross-cut adhesion test (5 x 5) was performed. Based on the coating remaining number after peeling, evaluation was performed as follows.

A: The remaining number is 20 or more and 25 or less.
B: The remaining number is 10 or more and less than 20.
C: The remaining number is less than 10.

<Preparation of Film>

A mixed liquid prepared by mixing 100 parts by mass of the aqueous urethane resin composition obtained in each of Examples and Comparative Examples, 1 part by mass of "HYDRANASSISTOR T10", an associative thicker manufactured by DIC CORPORATION, and 4 parts by mass of a crosslinking agent ("CARBODILITE V-02-L2", manufactured by Nisshinbo Chemical Inc.) was applied on a flat release paper ("EK-100D", manufactured by LINTEC Corporation) such that the thickness in terms of the solid content was 30 μm, followed by drying at 70°C for 2 minutes and further at 120°C for 2 minutes, thereby obtaining a film.

[Method of Evaluating Bleeding Resistance]

The obtained films each was cut into a length of 3 cm and a width of 3 cm, and the resultant films were immersed in the three kinds of plasticizers (dioctyl phthalate (DOP), diisononyl phthalate (DINP), and diisodecyl phthalate (DIDP)), respectively and after 24 hours, the length of each film was measured, and the swelling rate (%) was calculated according to the following formula (1).

$$\text{Swelling rate (\%)} = (\text{the length of the film after the 24 hours test - the length of the}$$

$$\text{film before the test)/ the length of the film before the test} \quad \text{x } 100 \quad (1)$$

Based on the obtained swelling rate, the bleeding resistance was evaluated as follows.

A: 10% or more

B: less than 10%

[Table 1]

| Table 1 | Example 1 | Example 2 | Example 3 | Example 4 | Comparative Example 1 | Comparative Example 2 |
|---|---|---|---|---|---|---|
| Evaluation of Adhesion | A | A | A | A | A | B |
| Evaluation of Bleeding Resistance | A | A | A | A | B | A |
| Swelling Rate (%) DOP | 18 | 25 | 19 | 18 | 8 | 17 |
| Swelling Rate (%) DINP | 15 | 23 | 17 | 15 | 7 | 15 |
| Swelling Rate (%) DIDP | 15 | 23 | 16 | 15 | 7 | 13 |

It can be seen that the laminates of Examples 1 to 4 according to the present invention are excellent in adhesion and bleeding resistance.

On the other hand, the embodiment of Comparative Example 1 is one where not the specific polycarbonate polyol but the other polycarbonate polyol was used, and exhibited poor bleeding resistance.

On the other hand, the embodiment of Comparative Example 2 is one where not the specific polycarbonate polyol but the other polytetramethylene glycol was used, and exhibited insufficient adhesion.

**Claims**

1. A laminate comprising a thermoplastic resin layer and a coating formed from a urethane resin composition containing a urethane resin having a structure derived from a polycarbonate polyol produced using a glycol having 8 to 12 carbon atoms as a raw material.

2. The laminate according to claim 1, wherein the urethane resin is one produced using a chain extender having an amino group as a raw material.

3. The laminate according to claim 1 or 2, wherein the urethane resin is one produced using an aliphatic polyisocyanate as a raw material.

4. A synthetic leather comprising a surface treatment layer on the side of the coating opposite to a thermoplastic resin layer.

5. The synthetic leather according to claim 4, wherein the thermoplastic resin is polyvinyl chloride.

## INTERNATIONAL SEARCH REPORT

| | International application No. |
|---|---|
| | **PCT/JP2021/028038** |

**A.    CLASSIFICATION OF SUBJECT MATTER**

*B32B 27/40*(2006.01)i; *B32B 27/30*(2006.01)i; *C08G 18/44*(2006.01)i; *C08G 18/66*(2006.01)i; *C08G 18/73*(2006.01)i; *D06N 3/14*(2006.01)i

FI:   B32B27/40; B32B27/30 101; C08G18/44; C08G18/66 048; C08G18/73; D06N3/14 101

According to International Patent Classification (IPC) or to both national classification and IPC

**B.    FIELDS SEARCHED**

Minimum documentation searched (classification system followed by classification symbols)

B32B1-00/43/00; C08G18/44; C08G18/66; C08G18/73; D06N1/00-7/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2019-81883 A (DIC CORP.) 30 May 2019 (2019-05-30) | 1-3 |
|   | claims 1, 6-7, paragraphs [0002], [0009]-[0046] | |
| Y | | 1-5 |
| Y | JP 2012-127010 A (KYOWA LEATHER CLOTH CO., LTD.) 05 July 2012 (2012-07-05) | 1-5 |
|   | claims 1, 4, paragraphs [0024]-[0029], fig. 6 | |
| A | JP 2013-108196 A (ASAHI KASEI CHEMICALS CORP.) 06 June 2013 (2013-06-06) | 1-5 |
|   | whole document | |
| A | JP 2016-199702 A (DIC CORP.) 01 December 2016 (2016-12-01) | 1-5 |
|   | whole document | |
| A | JP 2002-19032 A (IDEMITSU TECHNOFINE CO., LTD.) 22 January 2002 (2002-01-22) | 1-5 |
|   | whole document | |
| A | WO 2018/159359 A1 (SANYO CHEMICAL IND., LTD.) 07 September 2018 (2018-09-07) | 1-5 |
|   | whole document | |

☐ Further documents are listed in the continuation of Box C.      ☑ See patent family annex.

| *      Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **11 October 2021** | **19 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2021/028038**

| Patent document cited in search report | | | Publication date (day/month/year) | Patent family member(s) | | | Publication date (day/month/year) |
|---|---|---|---|---|---|---|---|
| JP | 2019-81883 | A | 30 May 2019 | CN | 109722918 | A | |
| | | | | claims 1, 6-7, paragraphs [0002], [0014]-[0051] | | | |
| JP | 2012-127010 | A | 05 July 2012 | (Family: none) | | | |
| JP | 2013-108196 | A | 06 June 2013 | (Family: none) | | | |
| JP | 2016-199702 | A | 01 December 2016 | (Family: none) | | | |
| JP | 2002-19032 | A | 22 January 2002 | US | 2004/0033367 | A1 | |
| | | | | whole document | | | |
| | | | | WO | 2002/004204 | A1 | |
| | | | | EP | 1306208 | A1 | |
| | | | | KR | 10-2003-0036600 | A | |
| WO | 2018/159359 | A1 | 07 September 2018 | EP | 3590986 | A1 | |
| | | | | whole document | | | |

Form PCT/ISA/210 (patent family annex) (January 2015)

**EP 4 241 988 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11293220 A